# EUROPEAN PATENT SPECIFICATION

(11) **EP 4 212 218 B1**
(45) Date of publication and mention of the grant of the patent: **12.08.2026**
(21) Application number: 23150478.8
(22) Date of filing: 05.01.2023
(51) Int. Cl.: A63B 24/00, G06V 20/40, G06T 7/20, G06V 40/10, A63B 102/02, A63B 102/04, A63B 102/06, A63B 102/08, H04N 5/77

(54) **A METHOD, COMPUTER PROGRAM, APPARATUS AND SYSTEM FOR RECORDING TENNIS SPORTING EVENT AS FROM GAME START AND STOP DETECTION**
VERFAHREN, COMPUTERPROGRAMM, VORRICHTUNG UND SYSTEM ZUR AUFZEICHNUNG EINES TENNIS-SPORTEREIGNISSES VOM BEGINN UND DER ERKENNUNG DES SPIELSTARTS UND -ENDS.
PROCÉDÉ, PROGRAMME INFORMATIQUE, APPAREIL ET SYSTÈME POUR L'ENREGISTREMENT D'UN ÉVÉNEMENT SPORTIF DE TENNIS À PARTIR DE LA DÉTECTION DU DÉBUT ET DE LA FIN DU MATCH.

(30) Priority: 14.01.2022 GB 202200450
(43) Date of publication of application: 19.07.2023
(73) Proprietor: Sony Group Corporation, Tokyo 108-0075 (JP); Sony Europe B.V., Weybridge, Surrey KT13 0XW (GB)
(72) Inventor: LUNT, Matthew, Basingstoke, RG22 4SB (GB); HARRISON, Alexander, Basingstoke, RG22 4SB (GB)
(74) Representative: D Young & Co LLP

(56) References cited:
- US-A1- 2011 169 959
- US-A1- 2014 180 451
- US-A1- 2017 083 769
- US-A1- 2018 250 571
- POLK TOM ET AL: "CourtTime: Generating Actionable Insights into Tennis Matches Using Visual Analytics", IEEE TRANSACTIONS ON VISUALIZATION AND COMPUTER GRAPHICS, IEEE, USA, vol. 26, no. 1, 1 January 2020 (2020-01-01), pages 397 - 406, XP011752632, ISSN: 1077-2626, [retrieved on 20191122], DOI: 10.1109/TVCG.2019.2934243

## Description

### BACKGROUND

### Field of the Disclosure

The present disclosure relates to a method, computer program, apparatus and system. More specifically, the present disclosure relates to a method, computer program, apparatus and system for object tracking.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

Object tracking technology is often employed during sporting events to track the position of objects in the events, such as the sports players. This allows information to be collected that indicates player movement, for example, which can then be used for various purposes such as live commentary, betting, post-game analysis of player technique, or the like. Tracking the position of the ball in a sporting event also allows information to be collected for applications such as electronic line calling, for example.

Storing all information collected continuously throughout an entire sporting event requires a significant amount of power and storage space. In addition, information collected at times when the sport is not being played is not useful as it does not relate to the sport. It is therefore desirable to only store information that is collected during the play of the sport to improve efficiency. This is usually achieved by an operator manually indicating that the play of the sport is starting (by pressing a button, for example), which sends an instruction to start storing the information to a device or system configured to store the information. Indicating the timeframe during which the sport is being played is also used to identify the period in which tracking software should apply appropriate adjudication. However, manually indicating that the play of the sport is starting is not only inconvenient for the operator but is also unreliable due to the risk of human error. For example, the operator may react slowly to the start of play, or forget to indicate that play of the sport is starting entirely.

It is an aim of the present disclosure to address the above problems.

### Prior art includes:

US 2014/180451 A1 related to trajectory detection and feedback system for tennis;
US 2011/169959 A1 related to systems and methods for analyzing event data;
US 2018/250571 A1 related to motion analysis device, motion analysis method, motion analysis system, and display method; and
US 2017/083769 A1 related to method for segmenting and annotating recorded video of tennis play based on motion/position of players and tennis ball in video.

### SUMMARY

The present disclosure is defined by the claims.

### BRIEF DESCRIPTION OF THE DRAWINGS

Non-limiting embodiments and advantages of the present disclosure will be best understood by reference to the following detailed description taken in conjunction with the accompanying drawings, wherein:
Figure 1 shows a configuration of an information processing device 100 according to embodiments of the disclosure.
Figure 2 depicts three objects in a tennis match in embodiments.
Figure 3 shows a table 300 where position information has been stored in embodiments.
Figure 4 depicts a tennis match directly after a start event has occurred in embodiments.
Figure 5 shows a table 500 where position information has been stored in embodiments.
Figure 6 is a flowchart showing a method 600 carried out by the information processing device 100 in embodiments.
Figure 7 depicts a tennis match where the service box 700 is highlighted.
Figure 8 depicts a tennis match directly after a start event has occurred in embodiments.
Figure 9 is a flowchart showing a method 900 carried out by the information processing device 100 in embodiments.

Like reference numerals designate identical or corresponding parts throughout the drawings.

### DETAILED DESCRIPTION OF THE EMBODIMENTS

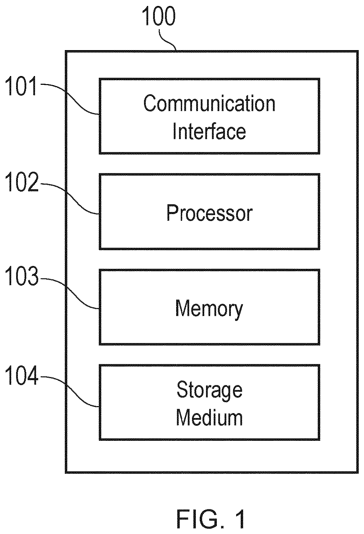

Figure 1 shows an information processing device 100 according to embodiments of the present disclosure. The information processing device 100 is configured to perform a series of processes to facilitate the storage of position information relating to an object in a sporting event by means of a method described below. The information processing device 100 comprises a communication interface 101 for sending electronic information to and/or receiving electronic information from one or more of the other information processing devices, a processor 102 for processing electronic instructions, a memory 103 for storing the electronic instructions to be processed and input and output data associated with the electronic instructions and a storage medium 104 (e.g. in the form of a hard disk drive, solid state drive, tape drive or the like) for long term storage of electronic information. Each of the communication interface 101, processor 102 and memory 103 are implemented using appropriate circuitry, for example. The circuitry may be embodied as solid state circuitry which may be controlled by software or may be an Application Specific Integrated Circuit. The software comprises computer readable instructions, which when loaded onto a computer or circuitry, configures the computer (or circuitry) to perform a method according to embodiments. The software is stored on the storage medium 204. The processor 102 controls the operation of each of the communication interface 101, memory 103 and storage medium 104.

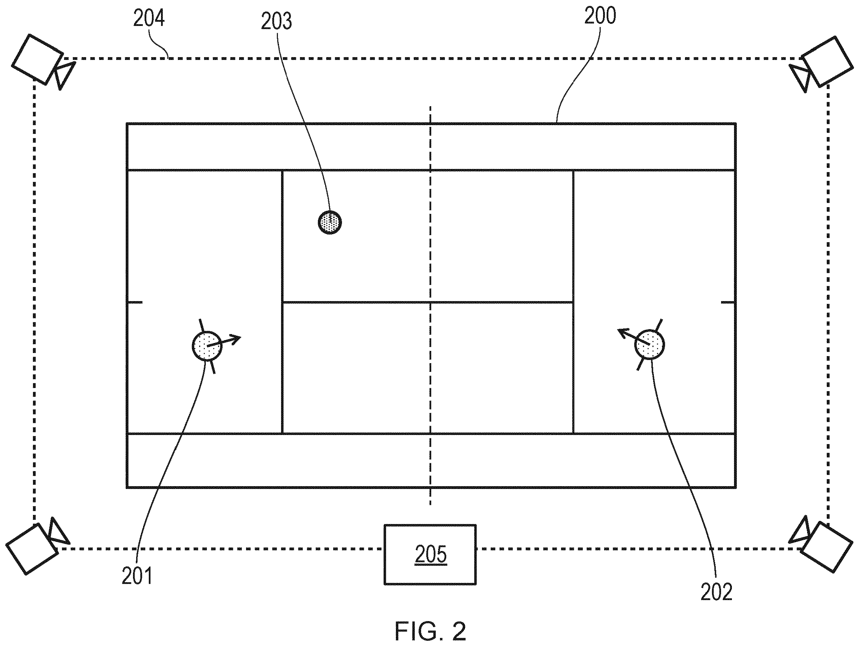

Figure 2 shows three objects, objects 201, 202 and 203, in a sporting event in embodiments of the disclosure. Objects 201 and 202 are players in the sporting event, whilst object 203 is a sporting projectile. Specifically, in these embodiments the sporting event is a tennis match, objects 201 and 202 are tennis players, and object 203 is a tennis ball. In Figure 2, player 201 and player 202 are shown playing tennis with the ball 203 on a tennis court 200. However, in other embodiments the present disclosure relates to other sporting events such as cricket, badminton or the like. The sports area where the sporting event is played is therefore not limited to a tennis court and may be a cricket pitch, badminton court or the like. Similarly, an object in the sporting event may be any type of sporting projectile (e.g. a cricket ball, shuttlecock or the like), a player in the sporting event (e.g. a cricket player, badminton player or the like), a person who is not a player (e.g. a referee) or another type of sports equipment such as a tennis racket, cricket bat, badminton racket or the like. The disclosure is not limited in this regard however, and an object may be any suitable type of object in the sporting event.

Figure 2 also shows a camera system 204, such as a system provided by Hawk-Eye^{®} Innovations Ltd, comprising a plurality of cameras. The cameras are positioned at different locations surrounding the tennis court 200, capturing images of an area covering at least part of the court. Whilst Figure 2 shows four cameras in the camera system 204, the present disclosure is not limited to this and the plurality of cameras may include any suitable number of cameras. The camera system 204 is connected to a routing device 205, which is connected to the information processing device 100 (not shown). However, in other embodiments the camera system 204 is connected to the information processing device 100 via one or more other devices in addition to or instead of the routing device 205. In further embodiments the camera system 204 is connected to the information processing device 100 directly. Each connection may be any suitable type of communication link known in the art (for example, a wireless or wired connection) through which electronic information can be transmitted.

In embodiments depicted in Figure 2, the camera system 204 sends image information corresponding to the images captured by the plurality of cameras to the routing device 205. Image analysis is then performed on the image information to obtain position information relating to each of the objects 201, 202 and 203 on the tennis court 200. The image analysis may comprise any suitable image processing techniques known in the art, such as object detection and tracking, pattern matching or the like. The routing device 205 then sends the position information relating to the objects 201, 202 and 203 to the information processing device 100. However, in other embodiments the routing device 205 sends image information received from the camera system 204 to another device to perform image analysis, which then sends the position information to the information processing device 100. In further embodiments, the information processing device 100 receives the image information and is configured to perform image analysis itself to obtain the position information.

Position information that relates to a certain object indicates the real-world position of the object within the area imaged by the camera system 204. For each image captured, any suitable image processing technique known in the art is used to detect an object in the image and identify its position within the image. Since the cameras in the camera system 204 are positioned at different locations surrounding the court 200, images captured by each camera show the detected object from different angles. The image analysis therefore comprises comparing the position of the object within each image to identify the real-world position of the object on the court 200.

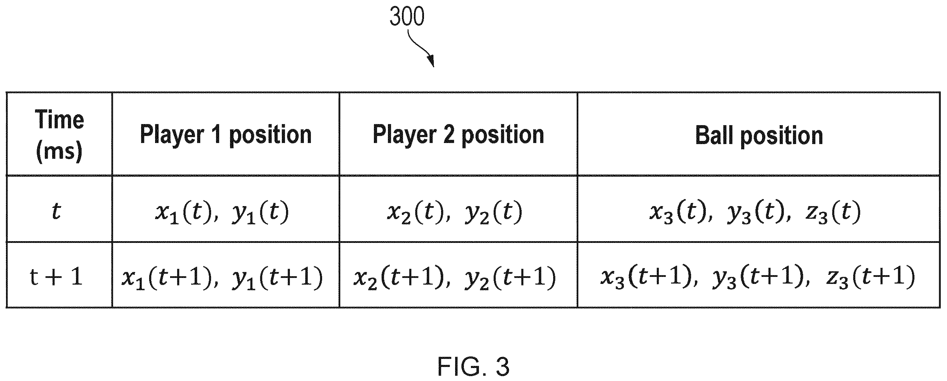

In some embodiments, the position information comprises further information about the objects. For example, the image analysis may not only detect an object in an image but additionally identify the type of object, such as a person or a sporting projectile. In further embodiments, the position information comprises information indicating a relative distance between two objects, a velocity of an object, an acceleration of an object, pose information indicating a pose of an object identified as a person, or the like. This is discussed in more detail in relation to Figures 3-5 below.

Techniques for obtaining position information other than those described above may be implemented as part of the present disclosure. For example, position information may be determined from the analysis of other types of information relating to the objects 201, 202 and 203, such as audio information corresponding to audio recorded at the tennis court 200. In other embodiments, the objects are provided with devices (for example, players may be provided with wearable devices) that identify their positions using global positioning technology or the like. Position information determined from the analysis of other types of information relating to the objects 201, 202 and 203 is provided directly or indirectly to the information processing device 100 in the same manner as described above.

Figure 3 shows a table 300 where position information obtained by the information processing device 100 has been stored in embodiments. In table 300, position information that relates to each object is stored in association with a particular time. The position information relating to each of the objects 201, 202 and 203 has been stored in the categories 'Player 1 position', 'Player 2 position' and 'Ball position' respectively. It is therefore apparent that the position information comprises information that identifies the type of each object: objects 201, 202 have been identified as tennis players and object 203 has been identified as a tennis ball. In table 300, the position information is in the form of coordinates. In embodiments, coordinates indicating the position of an object are measured relative to a particular reference position, such as the centre of the court 200. However, the present disclosure is not limited in this regard and the position information may be recorded in any suitable form. The position information in table 300 comprises coordinates in two dimensions for the 'Player 1 position' and the 'Player 2 position' but coordinates in three dimensions for the 'Ball position'. However, the disclosure is not limited in this regard and the position information may comprise coordinates in one, two or three dimensions in various embodiments. The time with which each set of coordinates is associated may be relative to a real-world time or a reference time. A reference time may, for example, correspond to the start of image capture by one or more of the cameras in the camera system 204.

Having obtained position information relating to an object in the sporting event, the information processing device 100 then performs a determination process to determine whether a start event has occurred in the sporting event. A start event is an event that indicates a start of play of the sport. For example, in a tennis match a start event may be defined as a tennis serve that starts a tennis game. In another example, in a cricket match, a start event may be defined as a bowler propelling a cricket ball from one end of the pitch towards the wicket at the other end. However, the present disclosure is not limited in this regard and a start event may be any event that indicates a start of play of the sport. The start event may occur directly before the start of play (e.g. a referee blowing a whistle, the approach of a player to a particular position on a sports pitch, or the like), or comprise an event that occurs directly after the start of play. For example, the entirety of a serve action in tennis may be the start event, including the follow-through motion of the serving player after they have hit the tennis ball. A start of play may be the start of the whole sporting event, the start of a particular subsection of play within the sporting event (e.g. a tennis game within a tennis match) or the resumed play of the sport after it has been temporarily paused (for example, in the event where a referee pauses the play of the sport).

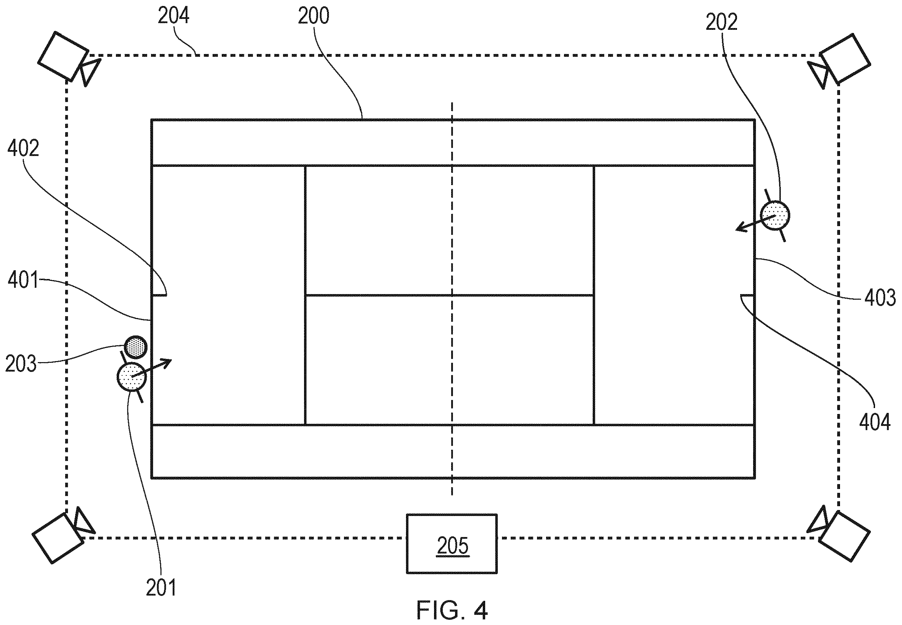

Figure 4 depicts the tennis match in Figure 2 at a time directly after a start event has occurred. In these embodiments, the start event is defined as the preparation for a tennis serve at the start of a tennis game. This is discussed in more detail below. In Figure 4, player 201 and player 202 are positioned on the pitch such that they are in appropriate positions to serve and receive the ball 203 respectively. The ball 203 is at approximately the same position as player 201. On one side of the tennis court 200, Player 201 is positioned behind the baseline 401. They are positioned on the right-hand side of the centre mark 402 when facing towards the centre of the court 200. In other words, they are positioned in the deuce court on their side of the court 200. This will be referred to as deuce court 1. On the other side of the tennis court 200, player 202 is positioned behind the baseline 403. They are positioned on the right-hand side of the centre mark 404 when facing towards the centre of the court 200. In other words, they are positioned in the deuce court on their side of the court 200. This will be referred to as deuce court 2.

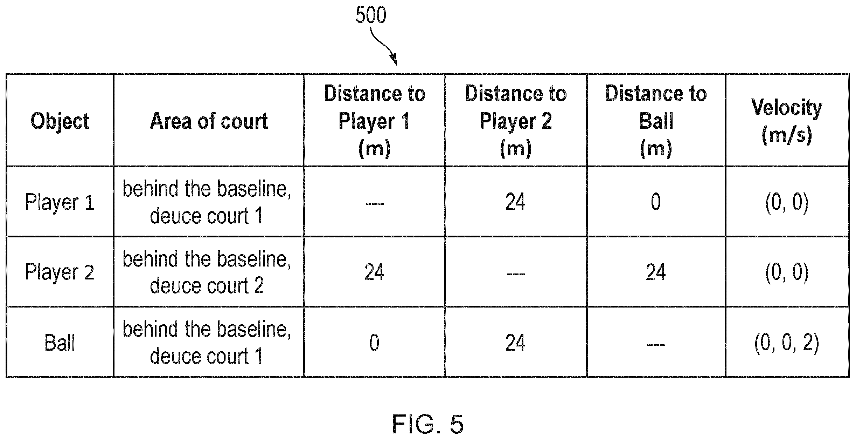

Figure 5 shows a table 500 where the position information obtained by the information processing device 100 has been stored in embodiments. In Figure 5, the position information comprises information indicating an area of the tennis court 200 within which each of the objects 201, 202 and 203 are located at the time depicted in Figure 4. Player 201 and the ball 203 have been identified to be in the area categorised as 'behind the baseline, deuce court 1' whereas player 202 has been identified to be in the area categorised as 'behind the baseline, deuce court 2'. In these embodiments, the tennis court 200 is divided into multiple areas and the area that each object is located within (for example, the area corresponding to a particular service box) is identified. The disclosure is not limited in this regard however, and in other embodiments the position information comprises information that indicates the position of an object relative to the sports area where a sporting event is being played in any suitable manner. In some embodiments, the sports area is divided into different regions in more than one manner, such that an object may be located in multiple regions simultaneously. For example, an object may be located within the region 'to the left of the right-hand baseline' and also within the region 'to the right of the net', where the right and left sides of the court are predefined.

In the embodiments depicted in Figure 5, the position information also comprises information that indicates the distance between each of the objects at the time depicted in Figure 4. Player 201 and player 202 are distanced approximately 24 metres apart, as they are positioned at opposite ends of the court as seen in Figure 4. Player 201 and the ball 203 are at approximately the same position. Whilst here the distance is recorded to the nearest meter, the disclosure is not limited in this regard and the distance may have any appropriate units and precision.

In table 500, the position information further comprises information indicating the velocity of each object at the time depicted in Figure 4. Player 201 and player 202 have been identified to be stationary, whilst the ball 203 is moving at 2 m/s in a vertical direction (for example, due to player 201 throwing it upwards in preparation to hit it with their tennis racket in a serve). In some embodiments the velocity associated with a particular point in time is a velocity calculated for a particular time period relative to that point in time. For example, if all the position information in table 500 is associated with a time *t*, the velocity recorded for each object may be the object's velocity between time (*t -* 10 ms) and time *t,* calculated based on the position of the object during this time period. The disclosure is not limited in this regard however, and the velocity of an object associated with a particular point in time may be calculated in any suitable manner known in the art.

It can be seen from table 500 that, in addition to indicating the real-world position of an object, the position information may comprise several types of further information about the object.

In other embodiments the position information comprises other types of information about an object than what is in table 500. For example, the position information may comprise pose information that indicates the pose of an object identified to be a person. Pose information may indicate the position of the person's limbs, the position of their centre of mass, the direction they are facing, or the like. In some embodiments, various known poses are classified into one of several predetermined categories associated with certain actions in the sport (e.g. 'walking', 'running', 'swinging a tennis racket' or the like). In these embodiments the pose information can therefore indicate whether a player's pose falls into one of these predetermined categories.

Having obtained position information relating to objects 201, 202 and 203 in the tennis match depicted in Figure 4, the information processing device 100 then determines whether a start event has occurred by processing the position information and identifying whether one or more conditions are met. Specifically, the information processing device 100 determines that a particular start event has occurred when a number of conditions associated with the start event are met. However, the present disclosure is not limited in this regard and in other embodiments the information processing device 100 determines whether a start event has occurred by identifying whether one or more conditions are met based on information other than received position information. In other embodiments the information processing device 100 may additionally or alternatively use any suitable information relating to the sporting event received in order to determine whether a start event has occurred, for example information relating to an umpire-generated call.

The conditions are related to information about the position of objects in a sporting event, and the information processing device 100 determines whether each condition is met based on the obtained position information. For example, a condition may be that 'an object that is identified to be a tennis ball is located within a predetermined area'. Position information relating to an object that indicates the type of object (indicating whether it is a tennis ball) and a region of the sports area within which it is located (indicating whether it falls within the predetermined area) may therefore be used to determine whether this condition is met.

The position information in table 500 relates to objects 201, 202 and 203 at a particular point in time. However, the present disclosure is not limited in this regard and in other embodiments the information processing device 100 records position information associated with more than one time, such as shown in Figure 3. In these embodiments the information processing device 100 may determine whether a start event has occurred using position information relating to objects over a rolling time period. For example, in some embodiments the most recently obtained position information that corresponds to a period of 3 seconds may be used. In these embodiments a condition associated with a start event may relate to, for example, whether the velocity or pose of an object identified to be a sports player has changed in a predetermined manner over the 3-second period.

It may be determined that the start event has occurred when a predetermined number of the associated conditions are met. For example, if the number of associated conditions met exceeds a predetermined threshold, it may be determined that the start event has occurred. However, the present disclosure is not limited in this regard and it may be determined that the start event has occurred in various other circumstances. For example, in some embodiments there is more than one combination of particular conditions that, when met, indicate that the start event has occurred. This allows the device 100 to take into account conditions which are met when a start event has occurred but which can also be met in other scenarios, and so do not necessarily prove that the start event has occurred on their own.

In embodiments depicted in Figure 4, the start event is defined as the preparation for a tennis serve at the start of a tennis game. An example of a combination of conditions that must be met to indicate this start event has occurred comprises the condition 'an object identified to be a tennis player is in the area 'behind the baseline, deuce court 1' at time t', the condition 'another object identified to be a tennis player is in the area 'behind the baseline, deuce court 2' at time *t*' and the condition 'an object identified to be a tennis ball is in the same area as an object identified to be a tennis player at time t'. Having obtained the position information shown in table 500 that relates to the objects 201, 202 and 203 as depicted in Figure 4, the information processing device 100 would therefore determine that each of these conditions is met and that the start event has occurred.

In some embodiments, identifying that a further combination of conditions is met can indicate that the start event has occurred. For example, a second combination of conditions that must be met may be the condition 'two objects identified to be tennis players have been positioned more than 23 m apart for the last 3 seconds', the condition 'an object identified to be a tennis ball has been positioned less than 1 m from an object identified to be a tennis player for the last 3 seconds' and the condition 'the horizontal velocity of all detected objects has been zero for the last 10 ms'. A third combination of conditions that must be met may be the condition 'two objects identified to be tennis players have been positioned more than 23 m apart for the last 3 seconds', the condition 'an object identified to be a tennis player has a 'serving' pose' and the condition 'another object identified to be a tennis player has a 'receiving' pose'. In this example, the 'serving' and 'receiving' poses are predefined and indicate that a player is about to perform a tennis serve and receive a tennis serve respectively.

The ability to determine whether a start event has occurred based on more than one combination of conditions allows the information processing device 100 to determine whether a start event has occurred in situations where the obtained position information is not sufficient to determine whether all possible conditions are met. For example, having obtained the position information shown in table 500, the information processing device 100 would not be able to determine whether the second and third combinations described above are met, since this position information does not comprise pose information and only corresponds to one point in time. The information processing device 100 would, however, be able to determine that the first combination described is met and successfully determine that the start event has occurred. In another example, in embodiments where the information processing device 100 only obtains position information relating to the players 201 and 202 but not the ball 203 it is still able to determine whether a start event has occurred if one of the combination of conditions only comprises conditions relating to the players.

If the information processing device 100 determines that a start event has occurred based on the obtained position information, the information processing device 100 generates an instruction to start storing the obtained position information. The instruction may be any suitable type of electronic instruction known in the art that can, when executed, cause a device or devices to store electronic information. In some embodiments the information processing device 100 executes this instruction itself and stores the position information in an internal or external storage medium. However, the disclosure is not limited in this regard and in other embodiments the information processing device 100 sends the instruction to an external device via a communication link. The external device may be any device capable of receiving electronic information. For example, the external device may be a remote server which stores the image representation data and/or sends it to a further device. In another example, the external device may be a user device such as a smart phone. The communication link may be any suitable type of communication link known in the art (for example, a wireless or wired connection) over which electronic information can be sent by the communication interface 101 of the information processing device 100.

In some embodiments, the information processing device 100 additionally sends the obtained position information to the external device. In embodiments where the information processing device 100 performs image analysis on received image information to obtain the position information, for example, it is beneficial for the information processing device 100 to send the position information to the external device so that the external device does not need to perform image analysis itself. However, the disclosure is not limited in this regard and in other embodiments the information processing device 100 sends the instruction only. In some of these embodiments, the external device receives the position information from another device such as the routing device 205. In another example, the external device may be the routing device 205.

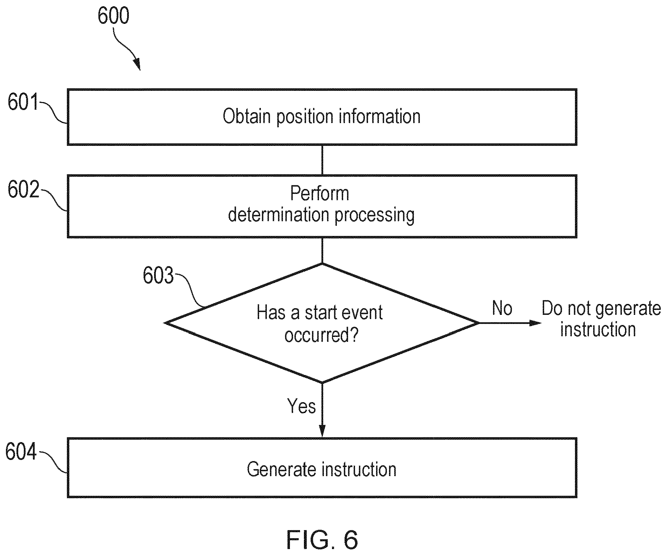

Figure 6 is a flowchart showing a method 600 carried out by the information processing device 100 in embodiments. In step 601 the information processing device 100 obtains position information relating to an object in a sporting event (for example, position information relating to object 201). In step 602 the information processing device 100 performs processing to determine, based on the position information, whether a start event has occurred (for example, determining that a start event has occurred if the position information indicates that the object 201 has a particular pose). In step 603 it is identified whether the result of the determination in step 602 indicates that a start event has occurred. If a start event has not occurred, the information processing device 100 does not continue to step 604 of the method 600 and an instruction is not generated. If a start event has occurred, the information processing device 100 continues to step 604. In step 604, an instruction to start storing position information is generated according to the determination result.

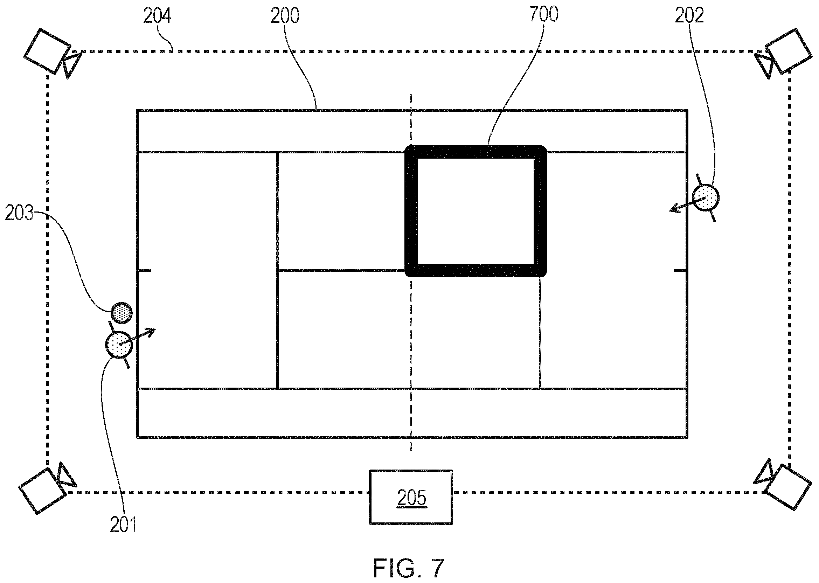

In some embodiments, having determined that a start event has occurred, the information processing device 100 is configured to perform additional processing on the position information. For example, in some embodiments where the information processing device 100 determines that a start event has occurred and wherein the start event is defined as the preparation for a tennis serve in a tennis match, the information processing device 100 performs additional processing to determine which service box in the tennis court the serve will be directed towards. Figure 7 shows the tennis match depicted in Figure 4, in which the service box 700 is highlighted. In embodiments, the device 100 determines that the serve will be directed towards the service box 700 by determining that the conditions 'a start event has occurred' and 'the ball 203 is located in the 'behind the baseline, deuce court 1' area' are met. By using the condition 'a start event has occurred', the information processing device is therefore able to identify the serving box that a serve will be directed towards with very little further processing. In these embodiments the information processing device 100 sends a service box indication signal comprising information indicating that the serve will be directed towards the service box 700 to an external device via a communication link. This may be the same external device to which the information processing device 100 sends the instructions to start storing or stop storing position information, or a different external device. The communication link may be any suitable type of communication link known in the art (for example, a wireless or wired connection) over which electronic information can be sent by the communication interface 101 of the information processing device 100.

The ability to determine that the play of the sport has started and send an instruction to start storing position information allows information to be stored only when the information is collected during the play of the sport. Specifically, performing the determination automatically without the need of an operator allows this to be achieved more reliably, as it does not include the risk of human error. In further embodiments of the disclosure, reliability can be further improved by additionally determining that the play of the sport has stopped and sending an instruction to stop storing position information. In these embodiments, the information processing device 100 obtains further position information relating to an object in the sporting event and then performs a second determination process to determine whether a stop event has occurred. A stop event is an event that indicates a stop of play of the sport. For example, in a tennis match a stop event may be defined as an event where the tennis ball enters an area outside the area of play (for example, behind the baseline). In a cricket match, the stop event may be defined as an event indicated by the umpire notifying the score to the scorer using a recognised hand signal, or by the scorer entering the score into the scoring system. However, the present disclosure is not limited in this regard and a stop event may be any event that indicates a stop of play of the sport. Similarly to a start event, a stop event may occur directly before the stop of play (e.g. a referee blowing a whistle, the approach of a sporting projectile to a particular position on a sports pitch, or the like), or comprise an event that occurs directly after the stop of play (e.g. an event in which all the players of the sport suddenly stop moving). A stop of play may be the end of the whole sporting event, the end of a particular subsection of play within the sporting event (e.g. a tennis game within a tennis match) or a temporary stop of the sport (for example, in the event where a referee pauses the play of the sport).

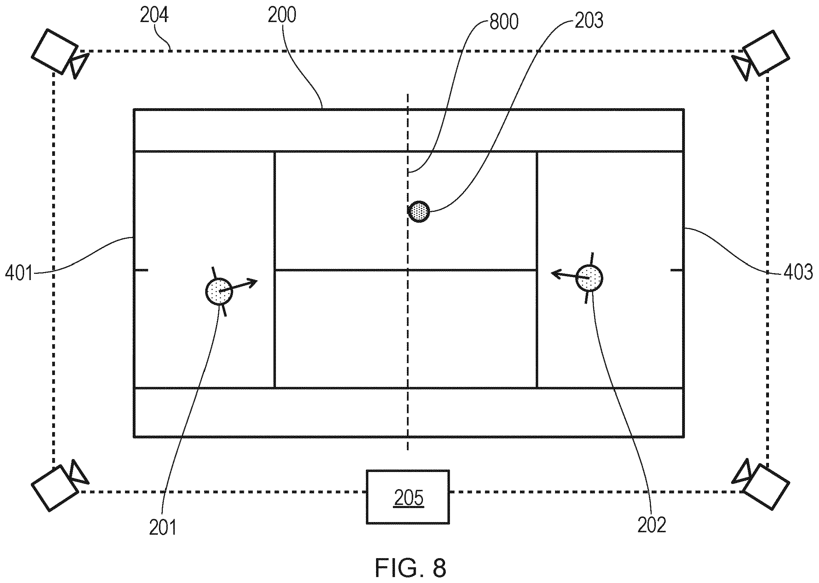

Figure 8 depicts the same tennis match as Figure 4, but at a time directly after a stop event has occurred. In these embodiments, the stop event is defined as the ball leaving the boundary of the court 200. In Figure 8, player 201 and player 202 are both positioned within the boundary of the court 200 whilst the ball 203 is positioned directly behind the baseline 403. In these embodiments, the information processing device 100 obtains position information relating to the objects 201, 202 and 203 in the same manner as described above. The information processing device 100 then determines whether a stop event has occurred by processing the position information and identifying whether one or more conditions are met, in the same manner as the first determination process to determine whether a start event had occurred. The information processing device 100 determines that a particular stop event has occurred when a number of conditions associated with the stop event are met. As before, the conditions are related to information about the position of objects in a sporting event, and the information processing device 100 determines whether each condition is met based on the obtained position information.

In embodiments depicted in Figure 8, a stop event is defined as the ball 203 hitting the net 800. An example of a condition that must be met to indicate this stop event has occurred may be 'an object identified to be a tennis ball is at the same position as the net'. Having obtained the position information relating to the object 203 that indicates the type of object and its position relative to the sports area within which it is located, the information processing device 100 would therefore determine that this condition is met and that the stop event has occurred. However, the present disclosure is not limited in this regard and it may be determined that a particular stop event has occurred when one or more of a number of conditions are met. For example, in some embodiments the information processing device determines that the stop event defined as the ball hitting the net has occurred when the condition 'an object identified to be a tennis ball is at the same position as the net' and also the condition 'the horizontal velocity of the ball has reduced to zero over a period of less than 1 second' are met..

In some embodiments, the information processing device 100 is configured to determine whether more than one type of stop event has occurred. For example, the information processing device 100 may determine that a first stop event has occurred when a first number of conditions associated with the first stop event are met and determine that a second stop event has occurred when a second number of conditions associated with the second stop event are met. This allows the device to identify when the play of the sport has stopped under different circumstances. For example, in some embodiments a first type of stop event in a tennis match may be an event where the ball hits the net, and a second type of stop event may be where the ball is mis-hit into the stands. The information processing device 100 may determine that the second stop event has occurred when the condition 'the position of the ball is outside the sporting area' is met.

If the information processing device 100 determines that a stop event has occurred based on the obtained position information, the information processing device 100 generates an instruction to stop storing the obtained position information. The instruction may be any suitable type of electronic instruction known in the art that can, when executed, cause a device or devices to stop storing electronic information. In some embodiments the information processing device 100 executes this instruction itself and stores the position information in an internal or external storage medium. However, the disclosure is not limited in this regard and in other embodiments the information processing device 100 sends the instruction to the external device discussed above via a communication link. The communication link may be any suitable type of communication link known in the art (for example, a wireless or wired connection) over which electronic information can be sent by the communication interface 101 of the information processing device 100.

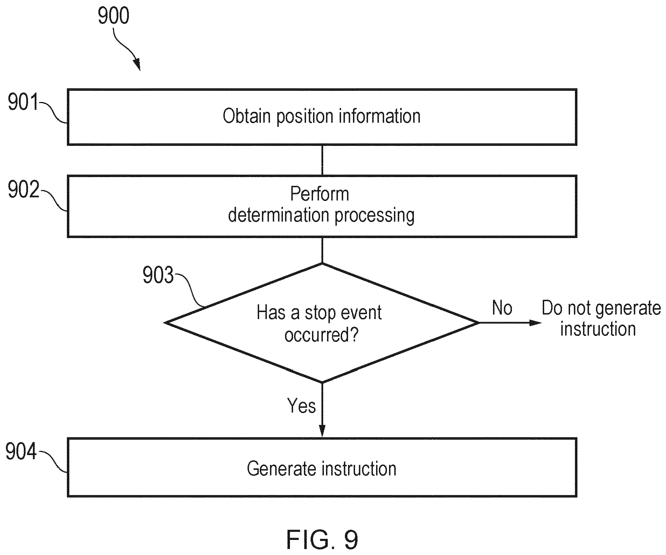

Figure 9 is a flowchart showing a method 900 carried out by the information processing device 100 in embodiments. In step 901 the information processing device 100 obtains position information relating to an object in a sporting event (for example, position information relating to the object 203). In step 902 the information processing device 100 performs processing to determine, based on the position information, whether a stop event has occurred (for example, determining that a stop event has occurred if the position information indicates that the object 203 is located in a particular area). In step 903 it is identified whether the result of the determination in step 902 indicates that a stop event has occurred. If a stop event has not occurred, the information processing device 100 does not continue to step 904 of the method 600 and an instruction is not generated. If a stop event has occurred, the information processing device 100 continues to step 904. In step 904, an instruction to stop storing position information is generated according to the determination result.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. A computer-implemented method, comprising:
obtaining (601) information relating to a plurality of objects in a sporting event,
determining (602), based on the information, that a start event has occurred, wherein the start event indicates a start of play of the sporting event,
generating (604), according to a result of the determination, an instruction to start storing position information relating to the position of at least one of the plurality of objects in the sporting event,
wherein the information comprises position information relating to the position of at least one of the plurality of objects,
wherein at least one of the plurality of objects is a player in the sporting event, and the method is **characterized in that** the information comprises pose information that indicates the pose of the player classified into one of several predetermined categories associated with different actions in the sporting event.

2. A method according to claim 1, wherein at least one of the plurality of objects is a sporting projectile in the sporting event.

3. A computer-implemented method according to claim 1, wherein the information comprises information that indicates the position of at least one of the plurality of objects relative to a sports area where the sporting event is being played.

4. A computer-implemented method according to claim 1, wherein the information comprises information that indicates the position of at least one of the plurality of objects relative to another object in the sporting event.

5. A computer-implemented method according to claim 1, wherein the information comprises information that indicates the velocity or acceleration of at least one of the plurality of objects.

6. A computer-implemented method according to claim 1, wherein the sporting event is a tennis match.

7. A computer-implemented method according to claim 6, wherein the method further comprises:
determining, based on the information, a service box of the tennis court that a serve will be directed towards, and
generating a service box indication signal that indicates the determined service box.

8. A computer-implemented method according to claim 1, wherein the method further comprises:
obtaining second information relating to a second object in the sporting event,
determining, based on the second information, that a stop event has occurred, wherein the stop event indicates a stop of play of the sporting event, and
generating, according to a result of the determination, a second instruction to stop storing position information relating to the position of the second object in the sporting event.

9. A computer-implemented method according to claim 8, wherein the second information comprises position information relating to the position of the second object.

10. A computer program comprising computer readable software, which when loaded onto a computer configures the computer to perform a method according to claim 1.

11. An apparatus comprising circuitry configured to execute the processing steps of the method according to claim 1.

12. A system comprising:
the apparatus according to claim 11, and
circuitry configured to store position information relating to the position of at least one of the plurality of objects in the sporting event according to the instruction.

## Revendications

1. Procédé mis en œuvre par ordinateur, comprenant :
l'obtention (601) d'informations relatives à une pluralité d'objets lors d'un événement sportif,
la détermination (602), sur la base des informations, qu'un événement de début s'est produit, dans lequel l'événement de début indique un début de jeu de l'événement sportif,
la génération (604), selon un résultat de la détermination, d'une instruction pour commencer à stocker des informations de position relatives à la position d'au moins l'un de la pluralité d'objets dans l'événement sportif,
dans lequel les informations comprennent des informations de position relatives à la position d'au moins un objet de la pluralité d'objets,
dans lequel au moins l'un de la pluralité d'objets est un joueur dans l'événement sportif, et le procédé est **caractérisé en ce que** les informations comprennent des informations de pose qui indiquent la pose du joueur classé dans l'une de plusieurs catégories prédéterminées associées à différentes actions dans l'événement sportif.

2. Procédé selon la revendication 1, dans lequel au moins un objet de la pluralité d'objets est un projectile sportif lors de l'événement sportif.

3. Procédé mis en œuvre par ordinateur selon la revendication 1, dans lequel les informations comprennent des informations qui indiquent la position d'au moins un objet de la pluralité d'objets par rapport à une zone sportive où se déroule l'événement sportif.

4. Procédé mis en œuvre par ordinateur selon la revendication 1, dans lequel les informations comprennent des informations qui indiquent la position d'au moins un objet de la pluralité d'objets par rapport à un autre objet dans l'événement sportif.

5. Procédé mis en œuvre par ordinateur selon la revendication 1, dans lequel les informations comprennent des informations qui indiquent la vitesse ou l'accélération d'au moins un objet de la pluralité d'objets.

6. Procédé mis en œuvre par ordinateur selon la revendication 1, dans lequel l'événement sportif est un match de tennis.

7. Procédé mis en œuvre par ordinateur selon la revendication 6, dans lequel le procédé comprend en outre :
la détermination, sur la base des informations, d'une boîte de service du court de tennis vers laquelle un service sera dirigé, et
la génération d'un signal d'indication de boîte de service qui indique la boîte de service déterminée.

8. Procédé mis en œuvre par ordinateur selon la revendication 1, dans lequel le procédé comprend en outre :
l'obtention de secondes informations relatives à un second objet dans l'événement sportif,
le fait de déterminer, sur la base des deuxièmes informations, qu'un événement d'arrêt s'est produit, dans lequel l'événement d'arrêt indique un arrêt de jeu de l'événement sportif, et
la génération, selon un résultat de la détermination, d'une seconde instruction pour arrêter le stockage d'informations de position se rapportant à la position du second objet dans l'événement sportif.

9. Procédé mis en œuvre par ordinateur selon la revendication 8, dans lequel les deuxièmes informations comprennent des informations de position relatives à la position du second objet.

10. Programme informatique comprenant des instructions lisibles par ordinateur qui, lorsqu'elles sont chargées sur un ordinateur, configurent l'ordinateur pour effectuer un procédé selon la revendication 1.

11. Appareil comprenant un ensemble de circuits configuré pour exécuter les étapes de traitement du procédé selon la revendication 1.

12. Système, comprenant :
l'appareil selon la revendication 11, et
un ensemble de circuits configuré pour stocker des informations de position se rapportant à la position d'au moins l'un parmi la pluralité d'objets dans l'événement sportif selon l'instruction.

## Patentansprüche

1. Computerimplementiertes Verfahren, umfassend:
Erhalten (601) von Informationen bezüglich einer Vielzahl von Objekten bei einem Sportereignis,
Bestimmen (602), basierend auf den Informationen, dass ein Startereignis eingetreten ist, wobei das Startereignis einen Spielstart des Sportereignisses angibt,
Erzeugen (604), gemäß einem Ergebnis der Bestimmung, einer Anweisung zum Starten eines Speicherns von Positionsinformationen bezüglich der Position von mindestens einem der Vielzahl von Objekten in dem Sportereignis,
wobei die Informationen Positionsinformationen bezüglich der Position von mindestens einem der Vielzahl von Objekten umfassen,
wobei mindestens eines der Vielzahl von Objekten ein Spieler bei dem Sportereignis ist, und das Verfahren **dadurch gekennzeichnet ist, dass** die Informationen Poseninformationen umfassen, die die Pose des Spielers angeben, die in eine von mehreren zuvor bestimmten Kategorien, die verschiedenen Aktionen bei dem Sportereignis zugeordnet sind, klassifiziert ist.

2. Verfahren nach Anspruch 1, wobei mindestens eines der Vielzahl von Objekten ein Sportprojektil bei dem Sportereignis ist.

3. Computerimplementiertes Verfahren nach Anspruch 1, wobei die Informationen Informationen umfassen, die die Position von mindestens einem der Vielzahl von Objekten relativ zu einem Sportbereich angibt, in dem das Sportereignis gespielt wird.

4. Computerimplementiertes Verfahren nach Anspruch 1, wobei die Informationen Informationen umfassen, die die Position von mindestens einem der Vielzahl von Objekten relativ zu einem anderen Objekt bei dem Sportereignis angibt.

5. Computerimplementiertes Verfahren nach Anspruch 1, wobei die Informationen Informationen umfassen, die die Geschwindigkeit oder Beschleunigung von mindestens einem der Vielzahl von Objekten angibt.

6. Computerimplementiertes Verfahren nach Anspruch 1, wobei das Sportereignis ein Tennismatch ist.

7. Computerimplementiertes Verfahren nach Anspruch 6, wobei das Verfahren ferner umfasst:
Bestimmen, basierend auf den Informationen, eines Aufschlagfelds des Tennisplatzes, auf das ein Aufschlag gerichtet sein wird, und
Erzeugen eines Aufschlagfeldangabesignals, das das bestimmte Aufschlagfeld angibt.

8. Computerimplementiertes Verfahren nach Anspruch 1, wobei das Verfahren ferner umfasst:
Erhalten von zweiten Informationen, die sich auf ein zweites Objekt bei dem Sportereignis beziehen,
Bestimmen, basierend auf den zweiten Informationen, dass ein Unterbrechungsereignis eingetreten ist, wobei das Unterbrechungsereignis eine Spielunterbrechung des Sportereignisses angibt, und
Erzeugen, gemäß einem Ergebnis der Bestimmung, einer zweiten Anweisung zum Unterbrechen des Speicherns von Positionsinformationen bezüglich der Position des zweiten Objekts bei dem Sportereignis.

9. Computerimplementiertes Verfahren nach Anspruch 8, wobei die zweiten Informationen Positionsinformationen bezüglich der Position des zweiten Objekts umfasst.

10. Computerprogramm, umfassend computerlesbare Software, die, wenn sie auf einen Computer geladen wird, den Computer konfigurieren, um ein Verfahren nach Anspruch 1 durchzuführen.

11. Einrichtung, umfassend eine Schaltung, die konfiguriert ist, um die Verarbeitungsschritte des Verfahrens nach Anspruch 1 auszuführen.

12. System, umfassend:
die Einrichtung nach Anspruch 11, und
die Schaltung, die konfiguriert ist, um Positionsinformationen bezüglich der Position von mindestens einem der Vielzahl von Objekten bei dem Sportereignis gemäß der Anweisung zu speichern.
